# EUROPEAN PATENT APPLICATION

(11) **EP 1 801 996 A1**
(43) Date of publication of application: **27.06.2007**
(21) Application number: 05292748.0
(22) Date of filing: 20.12.2005
(51) Int. Cl.: H04B 7/005

(54) **Method for controlling transmission power on a radio channel**

(71) Applicant: Nortel Networks Limited, St Laurent, Québec H4S 2A9 (CA)
(72) Inventor: Billon, Thierry, 92800 Puteaux (FR); Betrencourt, Samuel, 92130 Issy les Moulineaux (FR)
(74) Representative: Loisel, Bertrand

(57) **Abstract**

A method for controlling the transmission power on a radio channel (37) arranged for transmitting signals carrying elements of information arranged in successive timeslots from a first station (31) to a second station (32), the radio channel including a data channel and a substantially permanent control channel, the transmission power in a timeslot depending on a reception level, at the second station, of the signal transmitted in a preceding timeslot and on a target level (SIR_{target}), said target level being set in accordance with an error rate (41) calculated from the elements of information received from the first station. The error rate further takes account of a quality estimate on said control channel when at least one element of information is not transmitted.

## Description

The present invention relates to the control of the transmission power on a radio channel.

The role of the power control is to adapt the transmission power to radio conditions with respect to the relevant radio channel. Thus, the transmission power can be decreased or increased on a radio channel depending on whether or not a communication can be performed on this radio channel in a satisfactory way.

As an example, a particular mechanism for controlling the transmission power on a radio channel has been defined for the UMTS (Universal Mobile Telecommunication System) system.

According to this mechanism (see technical specification 3GPP TS 25.401, version 6.6.0, Release 6, published in June 2005, section 7.2.4.8), in the uplink direction, the transmission power of a radio terminal is slaved up or down by TPC (Transmit Power Control) bits inserted by the base station into each 666 µs timeslot. These TPC bits are determined by the base station in a fast closed inner loop aimed at aligning the SIR (Signal-to-Interferer Ratio) of the signal received from the radio terminal with a preset SIR_{target} assigned to it. This preset SIR_{target} is determined by the RNC (Radio Network Controller) in a slower outer loop so as to achieve a communication quality objective, generally expressed in terms of blockwise error rate (BLER).

Such mechanism is relatively efficient when blocks of information are permanently transmitted over the relevant radio channel. But a problem arises when one or several blocks are not transmitted over the radio channel, since then, the RNC does not have the needed information to be able to calculate a BLER and thus to determine the preset SIR_{target} in a reliable way.

If the absence of blocks transmitted on the radio channel lasts too long, the power control mechanism no more takes account of the radio conditions changes, so that the effective transmission power can be unsuitable. In other words, the transmission power of the radio terminal can be aligned with a SIR_{target} value of the past.

Such situation can occur quite often, especially in the uplink direction, where some communications can have only little useful traffic to be transmitted. This is the case for communications of the interactive/background type for instance. The situation is even worse when the silent mode is used, i.e. when no signalling message is transmitted over the radio channel.

A solution has been proposed in the past to overcome the above mentioned problem. It consists in basing the BLER calculation on a signallig channel, called SRB (Signalling Radio Bearer), so as to be able to keep on feeding the outer loop with a SIR_{target} value. The SRB is thus configured to transmit padding blocks with a constant size. A disadvantage of this solution is that the SIR_{target} obtained is not really relevant, since the padding blocks transmitted over the SRB generally have a different protection hence a different quality than normal blocks of information.

An object of the present invention is to overcome the disadvantages of the prior power control mechanisms.

Another object of the invention is to better control the transmission power on a radio channel, when one or several blocks of information is not transmitted over the radio channel.

The invention proposes a method for controlling the transmission power on a radio channel arranged for transmitting signals carrying elements of information arranged in successive timeslots from a first station to a second station, the radio channel including a data channel and a substantially permanent control channel, the transmission power in a timeslot depending on a reception level, at the second station, of the signal transmitted in a preceding timeslot and on a target level, said target level being set in accordance with an error rate calculated from the elements of information received from the first station. According to the method, the error rate further takes account of a quality estimate on said control channel when at least one element of information is not transmitted.

Since the control channel is substantially permanent, a reliable quality estimate can be obtained on it at any time. It thus gives relevant information to update the error rate, especially when at least one element of information is not transmitted, i.e. when the error rate cannot be updated in a usual way on the basis of new received elements of information.

In this way, the transmission power on the radio channel can be set continuously at a right value, which may avoid unnecessary interference, or communication degradation or loss on this channel.

Advantageously, the method takes place in a radiocommunication network, such as a UMTS network for instance. In this case, the first station may be a mobile station and the second station may be a base station for instance. Such power control is thus uplink. But a downlink power control is also possible within the framework of the present invention. Moreover, the error rate can be calculated by a radio network controller of the radiocommunication network.

Advantageously, the second station covers a cell within which the first station is located. A first and a second statistics relating to the quality estimate on control channels transmitting signals from mobile stations located within the cell are calculated, respectively for the case where an element of information transmitted by the corresponding mobile station presents a number of errors lower than or equal to a maximum number of errors that can be corrected and for the case where an element of information transmitted by the corresponding mobile station presents a number of errors lower than or equal to a maximum number of errors that can be corrected. The error rate calculated from the elements of information received from the first station can thus depend on the result of a comparison between the quality estimate measured on said control channel and said first and second statistics.

The invention also proposes a device capable of controlling the transmission power on a radio channel arranged for transmitting signals carrying elements of information arranged in successive timeslots from a first station to a second station, the radio channel including a data channel and a substantially permanent control channel, the transmission power in a timeslot depending on a reception level, at the second station, of the signal transmitted in a preceding timeslot and on a target level, the device comprising means for calculating an error rate from the elements of information received from the first station and means for setting said target level in accordance with the calculated error rate. In such device, the means for calculating the error rate take account of a quality estimate on said control channel when at least one element of information is not transmitted.

The invention also proposes a computer program product comprising instructions for at least partially implementing the above mentioned method, when loaded and executed by computer means.

Advantageously, the computer means belong to a radio network controller of a radiocommunication network, controlling said radio channel. Alternatively, they can belong to the base station receiving the radio channel, or can be distributed between the radio network controller and the base station.

The preferred features of the above aspects which are indicated by the dependent claims may be combined as appropriate, and may be combined with any of the above aspects of the invention, as would be apparent to a person skilled in the art.
- Figure 1 is a diagram of a UMTS network;
- Figure 2 is a diagram showing the organization in layers of communication protocols employed on the radio interface of the UMTS network;
- Figure 3 is a block diagram of the transmission part of a radio transceiver of a UMTS base station;
- Figure 4 is a block diagram of the transmission part of a UMTS mobile terminal;
- Figure 5 is block diagram of the inner loop of the power control in a UMTS network;
- Figure 6 is block diagram of the outer loop of the power control in a UMTS network;
- Figure 7 shows quality estimates distributions that can be used in the power control mechanism according to an embodiment of the invention.

The invention is illustrated here in its application to the uplink power control in a UMTS network. It will be appreciated that it can also apply to the downlink direction and/or other types of systems.

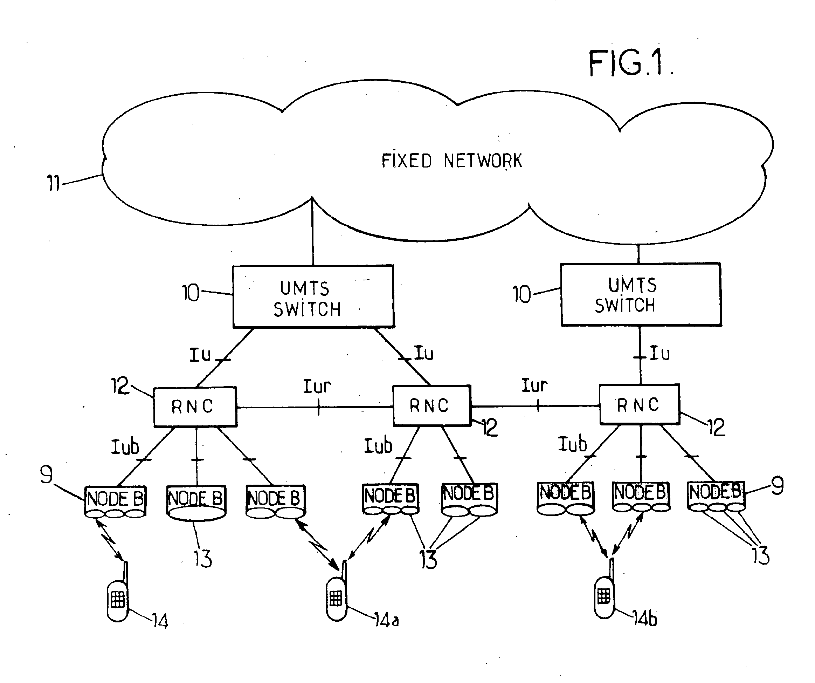

As shown in Figure 1, the switches of the mobile service 10, belonging to a core network (CN), are linked on the one hand to one or more fixed networks 11 and on the other hand, by means of an interface known as *lu,* to control equipments 12, or radio network controllers (RNC). Each RNC 12 is linked to one or more base stations 9 by means of an interface known as *lub.* The base stations 9, distributed over the network's coverage territory, are capable of communicating by radio with the mobile terminals 14, 14a, 14b called user equipment (UE). The base stations 9, also called "Node B", may each serve one or more cells by means of respective transceivers 13. Certain RNCs 12 can also communicate with one another by means of an interface known as *lur.* The RNCs and the base stations form an access network known as a "UMTS Terrestrial Radio Access Network" (UTRAN).

The UTRAN comprises elements of layers 1 and 2 of the ISO model in order to provide the links required on the radio interface (called *Uu*), and a radio resource control stage 15A (RRC) belonging to layer 3, as is described in technical specification 3G TS 25.301, "Radio Interface Protocol", version 3.4.0 published in March 2000 by the 3GPP (3rd Generation Partnership Project). Seen from the upper layers, the UTRAN simply acts as a relay between the UE and the CN.

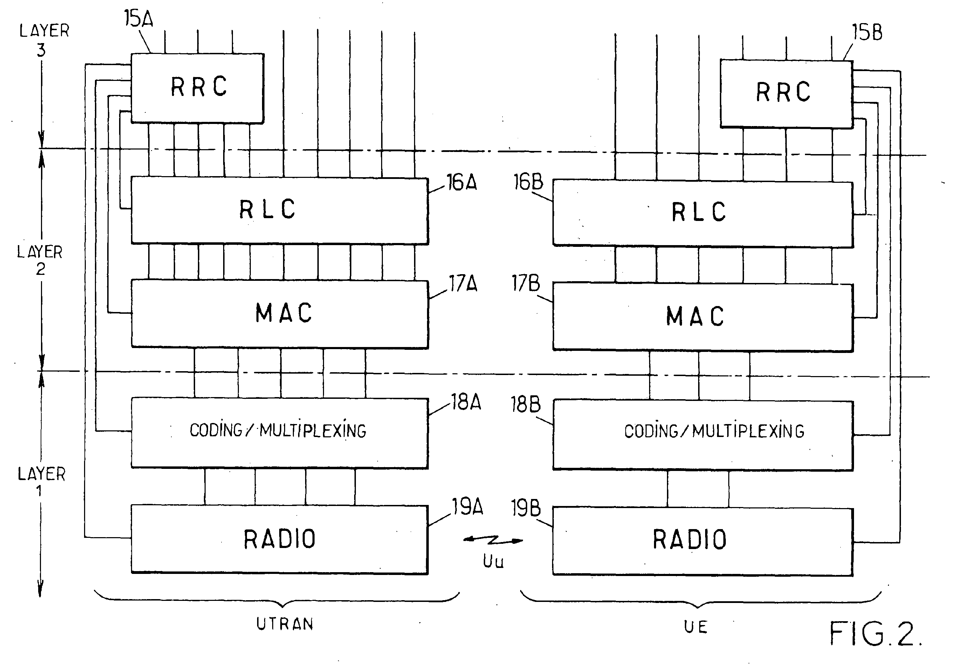

Figure 2 shows the RRC stages 15A, 15B and the stages of the lower layers which belong to the UTRAN and to a UE. On each side, layer 2 is subdivided into a stage 16A, 16B of radio link control (RLC) and a stage 17A, 17B of medium access control (MAC). Layer 1 comprises a stage 18A, 18B of encoding and multiplexing. A radio stage 19A, 19B transmits the radio signals based on streams of symbols supplied by the stage 18A, 18B, and receives the signals in the other direction.

There are different ways of adapting the architecture of protocols as shown in Figure 2 to the hardware architecture of the UTRAN as shown in Figure 1, and different organizations can usually be adopted to suit the types of channels (see section 11.2 of technical specification 3G TS 25.401, "UTRAN Overall Description", version 3.1.0 published in January 2000 by the 3GPP). The RRC, RLC and MAC stages are in the RNC 12. Layer 1 is for example in the Node B 9. A part of this layer may however be in the RNC 12.

When several RNCs are involved in a communication with a UE, there is usually a serving RNC, called SRNC, which contains the modules pertaining to layer 2 (RLC and MAC) and at least one drift RNC, called DRNC, to which is linked a base station 9 with which the UE is in radio contact. Appropriate protocols perform the interchanges between these RNCs over the *lur* interface, for example ATM ("Asynchronous Transfer Mode") and AAL2 ("ATM Adaptation Layer No. 2"). These same protocols may also be employed over the lub interface for the interchanges between a Node B and its RNC.

Layers 1 and 2 are each controlled by the sublayer RRC, the features of which are described in technical specification TS 25.331, "RRC Protocol Specification", version 4.1.0 published in June 2001 by the 3GPP. The RRC stage 15A, 15B monitors the radio interface. It also processes streams to be transmitted to the remote station according to a "control plan", as opposed to the "user plan" which is for processing the user data from layer 3.

The UMTS uses the CDMA spread spectrum technique, meaning that the symbols transmitted are multiplied by spreading codes consisting of samples called "chips" the rate of which (3.84 Mchip/s in the case of the UMTS) is greater than that of the symbols transmitted. The spreading codes distinguish different physical channels (PhCH) which are superimposed on the same transmission resource consisting of a carrier frequency. The auto- and cross-correlation properties of the spreading codes allow the receiver to separate the PhCHs and to extract the symbols that are sent to it.

For the UMTS in FDD ("Frequency Division Duplex") mode, on the downlink, a scrambling code is allocated to each transceiver 13 of each base station 9 and different physical channels used by that transceiver are distinguished by mutually orthogonal channelization codes. The transceiver 13 can also use several mutually orthogonal scrambling codes, one of them being a primary scrambling code. On the uplink, the transceiver 13 uses the scrambling code to separate the transmitter UEs, and where appropriate the channelization code to separate the physical channels from one and the same UE. For each PhCH, the global spreading code is the product of the channelization code and the scrambling code. The spreading factor (equal to the ratio between the chip rate and the symbol rate) is a power of 2 lying between 4 and 512. This factor is chosen according to the symbol rate to be transmitted over the PhCH.

The various physical channels are organized into frames of 10 ms which succeed one another on the carrier frequency used. Each frame is subdivided into 15 timeslots of 666 µs. Each timeslot can carry the superimposed contributions of one or more physical channels, comprising common channels and dedicated physical channels (DPCH).

On the downlink, one of the common channels is a pilot channel called common pilot channel (CPICH). This channel carries a pilot signal, or marker signal, formed on the basis of a predetermined sequence of symbols (see technical specification 3G TS 25.211, "Physical channels and mapping of transport channels onto physical channels (FDD)", version 3.3.0 published in June 2000 by the 3GPP). This signal is transmitted by the transceiver 13 on the primary scrambling code of the cell, with a determined channelization code.

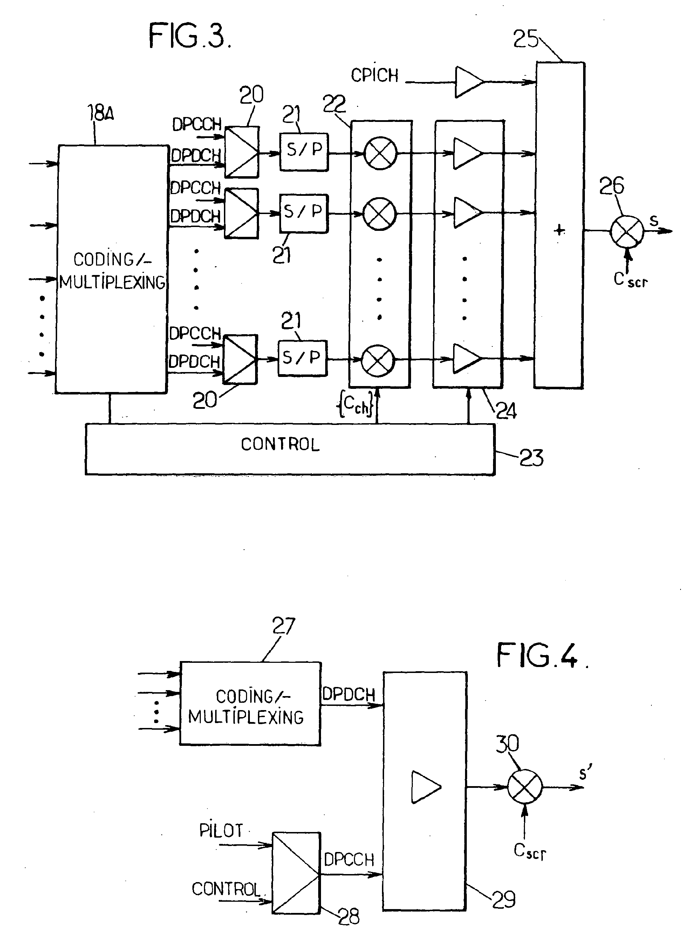

Figure 3 illustrates schematically the transmission part of a fixed transceiver 13 of a UMTS base station, serving a cell by means of a scrambling code c_{scr}. Layer 1 can multiplex several transport channels (TrCH) from the MAC sublayer onto one or more PhCHs. The module 18A receives the data streams of the downlink TrCHs, from the RNC, and applies to them the coding and multiplexing operations required to form the data part (DPDCH) of the DPCHs to be transmitted. These coding and multiplexing functions are described in detail in technical specification 3G TS 25.212, "Multiplexing and channel coding (FDD)", version 3.3.0 published in June 2000 by the 3GPP.

This data part DPDCH is multiplexed over time, within each 666 µs timeslot with a control part (DPCCH) comprising control information and predetermined pilot symbols, as shown diagrammatically in Figure 3 by the multiplexers 20 which form the bit streams of the DPCHs. On each channel, a serial/parallel converter 21 forms a complex digital signal the real part of which consists of the bits of even rank of the stream and the imaginary part of which consists of the bits of odd rank. The module 22 applies to these complex signals their respective channelization codes c_{ch}, which are allocated by a control unit 23. The module 24 weights the resultant signals according to the respective transmission powers of the physical channels, determined by a power control process.

The complex signals of the different channels are then summed by the adder 25 before being multiplied by the scrambling code c_{scr} of the cell by means of the module 26. The adder 25 also receives the contribution of the CPICH, which is not multiplied by a channelization code since the channelization code of the CPICH is constant and equal to 1 (technical specification 3G TS 25.213, "Spreading and modulation (FDD)", version 3.2.0 published in March 2000 by the 3GPP). The baseband complex signal s delivered by the module 26 is subjected to a shaping filter and converted to analog before modulating the carrier frequency in quadrature phase shift keying (QPSK) and being amplified and transmitted by the base station.

The different transmission resources of the transceiver 13 are allocated to the channels by the unit 23 under the control of the RRC stage 15A located in the RNC. The corresponding control messages are transmitted by means of a control application protocol of the transceivers, called NBAP ("Node B Application Protocol", see technical specification 3G TS 25.433, version 4.1.0, "UTRAN lub Interface NBAP Signalling", published in June 2001 by the 3GPP).

Figure 4 illustrates schematically the transmission part of a UE. It is assumed here that this UE transmits over a single physical channel. The module 27 performs the coding and where necessary the multiplexing of the corresponding TrCHs to a physical channel. This forms a real signal (DPDCH) which will be transmitted over a channel I. In parallel, control information and pilot symbols are assembled by a module 28 to form a real signal (DPCCH) which will be transmitted over a channel Q. The digital signals of channels I and Q form the real and imaginary parts of a complex signal the transmission power of which is adjusted by a module 29. The resulting signal is modulated by the spreading code of the channel comprising a scrambling code c_{scr}, as represented by the multiplier 30. The baseband complex signal s' thus obtained is then filtered and converted to analog before modulating the carrier frequency in QPSK.

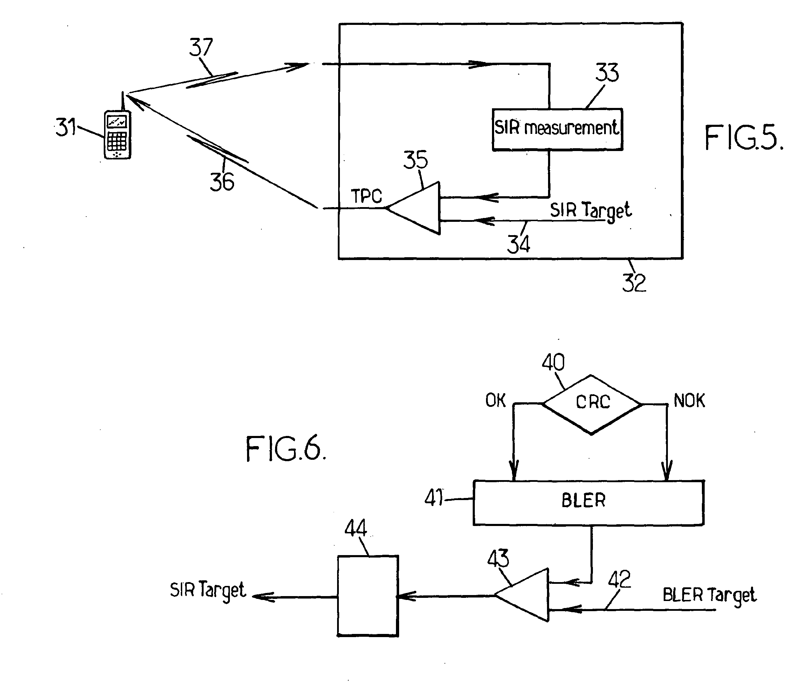

The uplink power control as defined in the UMTS standards (see technical specification 3GPP TS 25.401, version 6.6.0, Release 6, published in June 2005, section 7.2.4.8) will now be described with reference to Figures 5 and 6. In Figure 5, the UE 31 transmits signals carrying blocks of information to the Node B 32 over a single physical channel DPCH 37. On reception of each timeslot of a given frame transmitted over the DPCH 37, the Node B 32 makes a SIR measurement 33. This SIR measurement is then compared to a predetermined SIR_{target} value in a comparator module 35. As a result of the comparison, the Node B 32 delivers a TPC bit whose value can be +1 to increase or -1 to decrease the transmission power on the DPCH 37 by a step (e.g. +1 or -1 dB). The TPC bits are sent to the UE 31 from the Node B 32 in a downlink DPCCH channel 36.

Of course, other mechanisms could or be used instead or in addition to the one described above. For instance, another measurement than the SIR measurement 33 could be made, such as a simple signal level without reference to an interference level. In this case, the target level should be set accordingly and consistently.

Figure 6 schematically shows the steps of the outer loop as defined in the UMTS standards. These steps which aim at determining the SIR_{target} value to be inputted to the inner loop are typically performed in the RNC controlling the Node B 32 and responsible for the radio channel 37.

Each block of information transmitted over the uplink DPCH radio channel 37 contains a CRC (Cyclic Redundancy Checksum) including a number of bits appended to the information bits for transmission error evaluation. Schematically, a CRC 40 indicates whether a given block of information contains errors (or a determined amount of errors) on its reception at the RNC. It thus allows to determine whether the corresponding block of information is erroneous (NOK) or not (OK). Then, a BLER 41 is calculated from the indications provided by the CRC of successive blocks of information transmitted over the DPCH 37.

The BLER 41 is then compared with a predetermined BLER_{target} 42. This BLER_{target} 42 can differ depending on the service carried out for instance. The comparison 43 results in a change 44 in the SIR_{target} value to be used in the inner loop.

In this way, the SIR_{target} can be lowered when the quality of the transmission over the DPCH 37 is considered too good, i.e. when the BLER 41 is less than the predetermined BLER_{target} 42. This results in a decrease of the UE 31 transmission power. Conversely, the SIR_{target} can be increased when the quality of the transmission over the DPCH 37 is considered too bad, i.e. when the BLER 41 is more than the predetermined BLER_{target} 42, thus indicating a high level of transmission errors. This results in an increase of the UE 31 transmission power. The transmission power thus converges to a value so as to reach a target quality.

In what precedes, the outer loop power control has been based on the calculation of a BLER, i.e. an error rate based on blocks of information transmitted over an uplink channel. The notion of blocks of information relates to the transport level of the UMTS system. As described above, there can be a one-to-one relationship between a transport channel TrCH and a physical channel DPCH. But a single TrCH can be also mapped onto several DPCHs. Likewise, several TrCHs can be multiplexed on a single DPCH.

Other elements of information could be used in the power control mechanism instead or in addition to the blocks. For example, frames can be the elements of information that are taken into account in the outer loop to adapt the SIR_{target} in a relatively long-term. The error rate used in the outer loop must be set accordingly. For example, a frame error rate could replace the BLER in the mechanism illustrated in Figure 6. In this case, the update rhythm of the outer loop would thus be the duration of the frame (10 ms). In any case, it will be appreciated that the UL outer loop power control is mainly used for a long-term quality control of the radio channel.

At this stage, it will be understood that the performance of the outer loop as described with reference to Figure 6 highly depends on the possibility of calculating a relevant error rate indicator, such as the BLER 41. However, such indicator may not be available when the UE 31 does not transmit any information over the uplink DPCH 37 for some time. For example, one or several successive blocks (or frames) may not be transmitted by the UE 31.

In order to keep on controlling power on the DPCH 37 efficiently, the present invention takes advantage of the substantially permanent transmission over a DPCCH channel by each UE. Indeed, as explained with reference to Figure 4, control information and pilot symbols are assembled to form a real signal which will be transmitted over a channel Q. The corresponding channel DPCCH thus forms one of the two sub-channels (the other being a DPDCH) composing a dedicated physical channel DPCH. Even when no data information is to be transmitted over a DPDCH, the DPCCH carries control information.

Therefore, according to the invention, the outer loop partially relies on a quality observed on a DPCCH to determine the transmission power to be used by the UE concerned. More particularly, in the context of the UMTS system, the quality observed on the DPCCH can be used to calculate the SIR_{target} to be inputted to the inner loop.

As an example of implementation, the RNC controlling the uplink DPCH 37 over which the UE 31 of Figure 5 transmits information, can maintain two statistics for a whole cell covered by the Node B 32. The first statistic can be a distribution of a BER (Bit Error Rate) measured on each uplink DPCCH channel used within the cell when blocks, or more generally elements of information are received without error (or with an acceptable error level) at the RNC via the corresponding DPCH. The second statistic can be a distribution of a BER measured on each uplink DPCCH channel used within the cell when blocks, or more generally elements of information are received with error (or with an non-acceptable error level) at the RNC via the corresponding DPCH.

In other words, the CRC of each block of information received by the RNC from UEs located in said cell is analyzed. The first or second statistic is updated depending on whether the CRC indicates that the corresponding block of information is correct (OK) or erroneous (NOK).

It must be noted that the BER used for calculating the first and second statistics is a classical quality indicator, also known as QE (Quality Estimate) in the UMTS system, and can be easily obtained on a DPCCH, as taught by the present invention. Of course, other quality estimates could be used instead or in addition to determine a quality on the uplink DPCCHs transmitted within the cell.

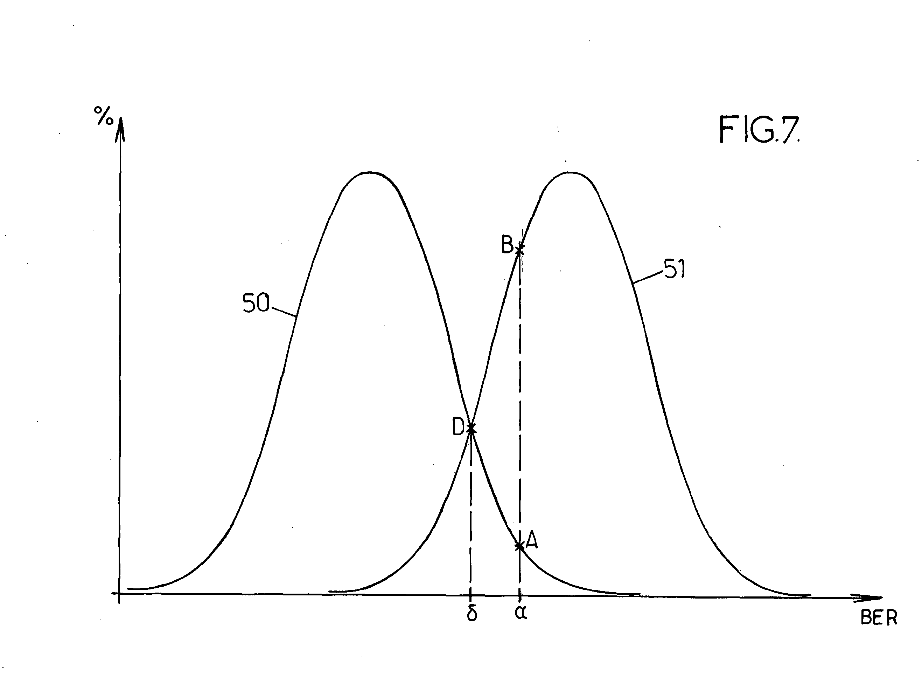

Figure 7 illustrates the above mentioned first and second statistics. The curve 50 represents the first statistic, i.e. the distribution of BER values measured on each uplink DPCCH channel used within the cell, when blocks of information are received via the corresponding DPCH without error or with a number of errors lower than or equal to the maximum number of errors that can be corrected (blocks OK). The curve 51 represents the second statistic, i.e. the distribution of BER values measured on each uplink DPCCH channel used within the cell, when blocks of information are received via the corresponding DPCH with error or with a number of errors higher than the maximum number of errors that can be corrected (blocks NOK).

Due to the crossing point D between the curves 50 and 51, it appears, in the example of Figure 7, that the probability of having a BER value less than δ is higher when the blocks of information are OK, whereas the probability of having a BER value more than δ is higher when the blocks of information are NOK.

Back to Figures 5 and 6, the power control can be performed as explained above when blocks of information are transmitted by the UE 31 over the DPCH 37 (which means that data are transmitted over the DPDCH sub-channel of the DPCH 37). In this case indeed, BLER values 41 can be determined normally from the CRCs included in the blocks of information, and a SIR_{target} can be derived therefrom.

Now, when one or several blocks of information is not transmitted over the DPCH 37, one or several BER (or QE) measurements is performed on the DPCCH sub-channel of the DPCH 37, as long as CRC indications are not available to update the BLER 41. The BER values are then compared to the above mentioned first and second statistics, in order to conclude whether the corresponding blocks of information would have been OK or NOK, if transmitted.

For example, an instantaneous BER measurement on the DPCCH having a value α gives, when placed on the diagram of Figure 7, a probability A that the corresponding block of information would have been OK and a probability B that the corresponding block of information would have been NOK, if transmitted. In the illustrated example, B>A. Thus, it will be concluded that the corresponding block of information would have been NOK, if transmitted.

Then, the RNC can update the BLER value 41 (or a frame error rate, or any equivalent information element error rate) to take into account this conclusion. In other words, the BLER 41 is updated as if a new CRC value had been obtained, indicating that the corresponding block of information was NOK. In this way, the BLER 41 can keep on representing the quality of the DPCH 37 in the long-term, even in the absence of data transmission on the corresponding DPDCH. A relevant SIR_{target} can thus be derived therefrom, in order to feed the inner loop. Consequently, the transmission power on the DPCH 37 is kept controlled continuously, even in the absence of data transmission on the corresponding DPDCH.

Of course, the BER values compared to the first and second statistics can be instantaneous measurements, but they can also be averages over a time period, especially when the duration of the absence of blocks transmission is significant. The averages are advantageously running averages.

The mechanism described above can be carried out as soon as one block of information is not transmitted over the relevant radio channel. But it can alternatively be carried out after a predetermined number of blocks of information are not transmitted over the relevant radio channel or after a predetermined period of time (e.g. 1 second).

Advantageously, it can be taken account of a BER measurement on the relevant DPCCH when blocks of information are transmitted over the corresponding DPCH. This constitutes a BER reference for the DPCCH, to which the measured BER values can be compared in view of deciding whether the corresponding block(s) of information would have been OK or NOK. For instance, the distributions 50 and 51 of Figure 7 could be normalized by the BER reference for the relevant DPCCH. The BER reference is advantageously updated periodically or continuously.

In what precedes, the BER measurements, the first and second statistics and the BLER calculation have been presented as being performed by an RNC. However, part of or all the operations can be made in the Node B concerned.

It should be noted that at least some of the operations described above can be carried out by virtue of a computer program, loaded and executed in computer means that can be located in a RNC, in a Node B or distributed between a RNC and a Node B.

## Claims

1. A method for controlling the transmission power on a radio channel (37) arranged for transmitting signals carrying elements of information arranged in successive timeslots from a first station (31) to a second station (32), the radio channel including a data channel and a substantially permanent control channel, the transmission power in a timeslot depending on a reception level, at the second station, of the signal transmitted in a preceding timeslot and on a target level (SIR_{target}), said target level being set in accordance with an error rate (41) calculated from the elements of information received from the first station, the method being **characterized in that** the error rate further takes account of a quality estimate on said control channel when at least one element of information is not transmitted.

2. A method as claimed in claim 1, wherein the first station is a mobile station (31) and the second station (32) is a base station of a radiocommunication network.

3. A method as claimed in claim 2, wherein the radiocommunication network further comprises a radio network controller controlling said radio channel and wherein the error rate (41) is calculated by the radio network controller.

4. A method as claimed in claim 2 or 3, wherein the second station (32) covers a cell within which the first station (31) is located, wherein a first (50) and a second (51) statistics relating to the quality estimate on control channels transmitting signals from mobile stations located within the cell are calculated, respectively for the case where an element of information transmitted by the corresponding mobile station presents a number of errors lower than or equal to a maximum number of errors that can be corrected and for the case where an element of information transmitted by the corresponding mobile station presents a number of errors higher than a maximum number of errors that can be corrected, and wherein the error rate (41) calculated from the elements of information received from the first station (31) depends on the result of a comparison between the quality estimate on said control channel and said first and second statistics.

5. A method as claimed in any one of the foregoing claims, wherein the transmission power in a timeslot further depends on an interference level with respect to the radio channel.

6. A device capable of controlling the transmission power on a radio channel (37) arranged for transmitting signals carrying elements of information arranged in successive timeslots from a first station (31) to a second station (32), the radio channel including a data channel and a substantially permanent control channel, the transmission power in a timeslot depending on a reception level, at the second station, of the signal transmitted in a preceding timeslot and on a target level (SIR_{target}), the device comprising means for calculating an error rate (41) from the elements of information received from the first station and means for setting said target level in accordance with the calculated error rate, the device being **characterized in that** the means for calculating the error rate take account of a quality estimate on said control channel when at least one element of information is not transmitted.

7. A device as claimed in claim 6, wherein the first station (31) is a mobile station and the second station (32) is a base station of a radiocommunication network, said device comprising a radio network controller controlling said radio channel.

8. A device as claimed in claim 7, wherein the second station (32) covers a cell within which the first station (31) is located, the device comprising means for calculating a first (50) and a second (51) statistics relating to the quality estimate on control channels transmitting signals from mobile stations located within the cell, respectively for the case where an element of information transmitted by the corresponding mobile station presents a number of errors lower than or equal to a maximum number of errors that can be corrected and for the case where an element of information transmitted by the corresponding mobile station presents a number of errors higher than a maximum number of errors that can be corrected, and wherein the means for calculating an error rate (41) from the elements of information received from the first station take account of the result of a comparison between the quality estimate on said control channel and said first and second statistics.

9. A device as claimed in any one of claims 6 to 8, wherein the transmission power in a timeslot further depends on an interference level with respect to the radio channel.

10. A computer program product comprising instructions for at least partially implementing the method as claimed in any one of claims 1 to 5, when loaded and executed by computer means.

11. A computer program product as claimed in claim 10, wherein the computer means belong to a radio network controller of a radiocommunication network, controlling said radio channel (37).
